Europäisches Patentamt

European Patent Office

Office européen des brevets

(19)

(11) **EP 1 108 995 A2**

(12) **EUROPÄISCHE PATENTANMELDUNG**

(43) Veröffentlichungstag:
    **20.06.2001 Patentblatt 2001/25**

(51) Int Cl.[7]: **G01J 3/28**

(21) Anmeldenummer: **00126241.9**

(22) Anmeldetag: **01.12.2000**

(84) Benannte Vertragsstaaten:
    **AT BE CH CY DE DK ES FI FR GB GR IE IT LI LU MC NL PT SE TR**
    Benannte Erstreckungsstaaten:
    **AL LT LV MK RO SI**

(30) Priorität: **17.12.1999 DE 19960910**

(71) Anmelder: **Agilent Technologies, Inc.**
    **Palo Alto, CA 94306 (US)**

(72) Erfinder: **Kuderer, Hubert**
    **76337 Waldbronn (DE)**

(74) Vertreter: **Harbach, Thomas et al**
    **c/o Agilent Technologies Deutschland GmbH,**
    **Patentabteilung,**
    **Herrenberger Strasse 130**
    **71034 Böblingen (DE)**

(54) **Vorrichtung und Verfahren zur Qualitätskontrolle eines Photosensors**

(57)    Die Erfindung betrifft ein Verfahren und eine Vorrichtung zur Durchführung des Verfahrens zur Qualitätskontrolle eines Photosensors 21, insbesondere eines Photodiodenarrays, dessen Ausgangssignal von der Intensität eines mit elektromagnetischen Wellen gebildeten Eingangssignals abhängt. Der zu testende Photosensor 21 wird mit die Eingangssignale ausbildenden Stimuliersignalen unter Variation der Stimuliersignalintensität der Stimuliersignale beaufschlagt. Dabei werden die zugehörigen Ausgangssignale des zu testenden Photosensors 21 wird gemessen und zu Auswertungszwecken erfaßt. Der Photosensor 21 wird vorzugsweise mit wenigstens zwei unabhängig voneinander steuerbaren, sich überlagernden individuellen Stimuliersignalen 41, 42, 43, 44 individueller Stimuliersignalintensität beaufschlagt. Die Einstellung der unterschiedlichen Stimuliersignalintensität der individuellen Stimuliersignale 41, 42, 43, 44 erfolgt mit Hilfe einer mit der Stimuliersignalquelle 31, 32, 33, 34 gekoppelten Kontrolleinheit 55 und die Messung und Erfassung der Ausgangssignale des Photosensors erfolgt mit Hilfe einer Meßdatenerfassungseinheit 65.

Fig. 1

EP 1 108 995 A2

**Beschreibung**

Die Erfindung betrifft eine Vorrichtung und ein Verfahren zur Qualitätskontrolle eines Photosensors, insbesondere eines Photodiodenarrays oder einer Photodiodenmatrix, dessen Ausgangssignal von der Intensität eines mit elektromagnetischen Wellen gebildeten Eingangssignals abhängt, wobei der zu testende Photosensor mit die Eingangssignale ausbildenden Stimuliersignalen unter Variation der Stimuliersignalintensität der Stimuliersignale beaufschlagt wird, und wobei die zugehörigen Ausgangssignale des zu testenden Photosensors gemessen und zu Auswertungszwecken erfaßt werden.

Photosensoren, insbesondere Photodiodenarrays werden beispielsweise in Spektrometern, Farbmeßsystemen, Scannern und Mustererkennungssystemen eingesetzt. Ein Photodiodenarray ist durch eine lineare Anordnung von photosensitiven Elementen ausgebildet und generiert Ausgangssignale, die ein Maß für die von den individuellen photosensitiven Elementen empfangenen Lichtintensitäten darstellen. Derartige Photodiodenarrays sind in einer Vielzahl von unterschiedlichen Typen erhältlich. Einfache Typen bestehen nur aus einer Anordnung einer Anzahl von Photodioden mit entweder gewöhnlicher Anode oder gewöhnlicher Kathode, wobei die individuellen Photodioden mit separaten Anschlußstiften für die Ausgangssignale verbunden sind. Zur Verbesserung der Signalgenauigkeit und/oder einer besseren Einsatz- bzw. Benutzertauglichkeit sind die auf Chips bzw. Wafern angeordneten Photodiodenarrays hin zu integrierten Photodiodenarrays mit einer größeren Funktionalität entwickelt worden. Von zunehmendem Interesse sind sogenannte ,,Aktive-Pixel-Sensoren" (APS). Deren Besonderheit liegt darin, daß jedem Pixel, also jedem individuellen Photosensorelement, zunehmend komplexere Schaltungselemente zugeordnet werden. Solche aktive Schaltungselemente können verstärkende bis hin zu digitalisierende Schaltungsfunktionen umfassen. Dabei lassen sich zwei Haupttypen und zwar Multiplex-Photodiodenarrays sowie Parallel-Photodiodenarrays unterscheiden.

Bei Mulitplex-Photodiodenarrays sind auf dem Chip bestimmte elektronische Schaltungen integriert, welche es ermöglichen, die Photosignale über einen einzelnen Signalweg auszulesen und zu bearbeiten. Je nach der auf dem Chip implementierten Funktionalität sind die Ausgangssignale entweder analog oder digital. Die von den individuellen Photodioden generierten Ladungen werden zwischen den Auslesezyklen in mit diesen verbundenen Kondensatoren über ein Integrationsintervall gespeichert. Am Ende dieses Integrationsintervalls werden die Pixels ausgelesen, indem die jeweiligen Ladungen über elektronische Schalter sequentiell auf eine gemeinsame Leitung überführt werden. In diesem Fall ist im weiteren Signalpfad ein A/D-Wndler vorgesehen, der die Signale nacheinander in digitale Werte konvertiert. Häufig sind solche A/D-Wandler bereits auf dem Siliziumchip implementiert. Es werden dann meist Wandler vom Typ ,,Successive Approximation" eingesetzt, da diese einen sehr guten Kompromiß in Bezug auf Geschwindigkeit und Komplexität darstellen. Leider führen bei diesem Typ Prozeßvariationen häufig zu differentiellen Nichtlinearitäten.

Bei den Parallel-Photodiodenarrays sind auf den Chips Analog/Digital-Konverter für jedes einzelne Photoelement implementiert. Die Parallel-Photodiodenarrays liefern gleichzeitig generierte digitale Ausgangssignale, die entweder über serielle oder parallele Bussysteme zugänglich sind. Ein derartiger Sensor arbeitet folglich inherent simultan, was in vielen Applikationen sehr wichtig ist. Es steigt allerdings auch die Komplexität des Sensors und die Defekthäufigkeit während des Herstellungsprozesses nimmt zu.

Neben den Photodiodenarrays mit einer linearen Anordnung von Photosensorelementen sind auch Matrix-Photodiodenarrays bekannt. Diese sind flächenorientiert aufgebaut und die Pixels sind in Reihen und Spalten angeordnet. Vielfach werden diese Sensoren als Kamerachips oder Bild-Sensoren eingesetzt.

Durch die Implementierung einer zunehmend größeren Funktionalität auf den Photosensorchips sind diese zunehmend komplizierter in Aufbau, Handhabung und Funktion. Damit steigt auch die Defektwahrscheinlichkeit während des Herstellungsprozesses. Dementsprechend müssen spezialisiertere Tests durchgeführt werden, um die Eigenschaften derartiger Photosensoren bereits während des Herstellungsprozesses zum Zwecke einer Qualitätskontrolle zu prüfen. Dies erfordert sowohl hoch spezialisierte optische Stimuliersignale als auch hoch spezialisierte Testverfahren, welche den Anforderungen an die Genauigkeit und die Testzeit genügen. Typische, die Eingangs-/Ausgangs-Funktion charakterisierende und zu prüfende Eigenschaften der Photosensoren betreffen die integrale und differentielle Linearität, die Antwortfunktion bzw. Ausgangssignale als Funktion der Wellenlängen, die Geräusch- bzw. Störungsintensität als Funktion der Signalintensität der Eingangssignale sowie die Gleichmäßigkeit bzw. Homogenität der Antwortsignale jedes einzelnen Photoelements innerhalb des zu testenden Photodiodenarrays. Ferner sind auch die mechanischen Einschränkungen, insbesondere die Zugänglichkeit der Photosensoren bei auf "Wafer-Niveau" durchzuführenden Tests während des Herstellungsprozesses zu beachten.

Zur Qualitätskontrolle derartiger Photosensoren muß deren Eingangs/Ausgangs-Übertragungsfunktion geprüft werden. Hierzu wird ein optisches Stimuliersignal generiert und mit diesem der Sensor beaufschlagt, wobei dessen Antwort- bzw. Ausgangssignal unter Variation der Intensität der Eingangs- signale gemessen wird. Hierzu ist die Kenntnis der jeweiligen Stimuliersignalintensität erforderlich. Diese wird bislang mit Hilfe eines Referenzsensors bestimmt, dessen Eingangs-/Ausgangs-Übertragungs-Funktion bekannt ist. Hierzu wird üblicherweise zunächst eine Messung mit Hilfe des Referenzsensors durchgeführt, der hierzu an derjenigen Geräteposition eingebaut wird, an der später der zu testende Photosensor eingebaut werden soll. Dabei ist es erforderlich in einem ersten Schritt mit Hilfe des Referenzsensors das Stimuliersignal zu messen und zu charakterisieren. Anschließend muß in einem zweiten aufwendigen Schritt der Referenzsensor entfernt werden und durch den zu testenden Photosensor (DUT) ersetzt werden. Daran muß sich eine weitere Messung unter Verwendung desselben Stimuliersignals im Hinblick auf dessen zeitlichen Verlauf und der jeweiligen Stimuliersignalintensität unter möglichst denselben Test- und Umgebungsbedingungen durchgeführt werden. Dadurch, daß die jeweiligen Ausgangssignale gemessen und zu Auswertungszwecken erfaßt werden, können anschließend die Ergebnisse beider Messungen in Beziehung gesetzt werden, was ein Maß für die Qualität des zu testenden Photosensors darstellt. Dabei ist es notwendig, beide Messungen, also die Messung der Sollwerte unter Verwendung des Referenzsensors und die Messung der Istwerte unter Verwendung des zu testenden Photosensors (DUT), unmittelbar hintereinander oder jedenfalls mit einem nur kurzen Unterbrechungsintervall durchzuführen. Denn anderenfalls kann es zu teilweise erheblichen Unsicherheiten hinsichtlich der zwischenzeitlichen Veränderung der Umgebungsbedingungen oder auch von Unsicherheiten bezüglich einer veränderten Strahlung- scharakterisktik der Lichtquelle, beispielsweise bedingt durch Alterungsvorgänge über der Zeit kommen. Dies führt im übrigen auch dazu, daß in bestimmten Zeitabständen die Kalibrierungsmessung unter Verwendung des Referenzsensors erneut durchzuführen ist, so daß dann jedesmal die Ein- und Ausbauprozedur mit dem Referenzsensor bzw. dem zu testenden Sensor (DUT) durchzuführen ist.

Diese nach dem Stand der Technik übliche Vorgehensweise ist folglich mit einer Reihe von Problemen und Schwierigkeiten behaftet. Bedingt durch den einmaligen bzw. mehrmaligen Wechsel der Photosensoren treten Unsicherheiten bezüglich der dadurch bedingten Veränderung der genauen räumlichen Position der Sensoren auf, die zu entsprechenden Meßunsicherheiten bzw. Ungenauigkeiten führen. Weitere Unsicherheiten können durch Unterschiede in den jeweiligen Typen von Photosensoren, also dem Referenzsensor und den zu testenden Sensoren sowie den Eigenschaften der Ausgangssignale und der Meßanordnungen entstehen. Die bisher notwendige Ein- und Ausbauprozedur führt zu langen Testzykluszeiten und erlaubt keine bzw. nur sehr eingeschränkte Automatisierungsmöglichkeiten für die Qualitätskontrolle.

Insbesondere bei der Messung von kleinen Änderungen der Stimuliersignalintensität, beispielsweise bei photometrischen Meßverfahren mittels Spektrometern, Absorbance-Detektoren, Farbmeßsystemen oder bei Absorptionsmesungen, wirken sich Fehler der differenziellen Linearität der Photosensoren störend aus und werden durch die differenzielle Nichtlinearität (DNL) des zu testenden Photosensors charakterisiert. Derartige Fehler führen zu einer Verzerrung der Meßergebnisse und zu einem erhöhten Quantisierungsrauschen. Die DNL wird bislang bestimmt, indem eine kleine kontinuierliche Veränderung des Eingangssignals vorgenommen und die zugehörigen Ausgangssignale gemessen werden.

Bei Photosensoren mit digitalen Ausgangssignalen ist die DNL definiert als die Abweichung der individuellen Quantisierungsstufe von der mittleren, erwarteten Quantisierungsstufe. Diese DNL kann in der Form sogenannter ,, missing codes" (Fig. 3), "double codes" (Fig. 4) oder als "dead zone" (Fig. 5) auftreten. Demgegenüber zeigt Fig. 6 eine fehlerfreie Eingangs-/Ausgangs- Signalübertragungsfunktion eines Photosensors.

Durch einen Vergleich bzw. Bezug des Eingangssignals und des Ausgangssignals des Photosensors läßt sich die DNL ermitteln. Dies setzt bisher bei gezielter Aussteuerung über den gesamten Aussteuerbereich die genaue Kenntnis der Größe des Eingangssignals voraus oder die Größe des Ausgangssignals muß durch Referenzmessung erfaßt werden. Beide Verfahren sind sehr aufwendig und zeitintensiv. Denn die gewünschte Amplitudenauflösung, Genauigkeit und die Stabilität optischer Aussteuersignale ist sehr schwierig zu realisieren (Drift, Temperatur, örtliche Unterschiede etc.) und die Unzulänglichkeiten optischer Referenzbildung sind zum Teil erheblich. In letzterem Fall beeinflussen aufbaubedingte Eigenarten, Unterschiede in der Charakteristik des zu testenden Sensors und des Referenzsensors sowie statistische Unsicherheiten sehr stark das Ergebnis. Dies um so mehr, je größer die räumliche Ausdehnung des Sensors ist.

Demgemäß ist es eine Aufgabe der Erfindung, ein Verfahren zur Qualitätskontrolle von Photosensoren und eine Vorrichtung zur Durchführung des Verfahrens zu schaffen, das exaktere Testergebnisse bei kürzeren Testzykluszeiten und einem hohen Automatisierungsgrad sowie die Durchführung von Tests direkt auf ,,Wafer-Niveau" ermöglicht.

Dies wird bei dem erfindungsgemäßen Verfahren durch die Merkmale des Patentanspruches 1, insbesondere dadurch erreicht, daß der zu testende Photosensor mit wenigstens zwei unabhängig voneinander steuerbaren, sich überlagernden individuellen Stimuliersignalen individueller Stimuliersignalintensität beaufschlagt wird. Dabei wird von dem Grundgedanken einer linearen Überlagerung der Stimuliersignalintensitäten der individuellen Stimuliersignale ausgegangen. Dadurch ist es nunmehr möglich, auf die aufwendige Kalibrierprozedur in Verbindung mit einem häufigen Ein- und Ausbau eines Referenzsensors sowie den Wechsel mit dem zu testenden Photosensor zu verzichten, und die damit verbundenen Unsicherheiten zu vermeiden. Dies ermöglicht genauere Testresultate bei der Qualitätskontrolle der zu testenden Photosensoren und ermöglicht schnelle und kostengünstige Tests auf Wafer-Niveau in Verbindung mit einem hohen Automatisierungsgrad der Qualitätskontrolle. Dabei wirkt es sich besonders vorteilhaft aus, daß anstelle der zyklischen Referenzmessungen nunmehr die Übertragungscharakteristik des optischen Systems nur einmal kalibriert werden muß und daß der Lichtfluß und dessen Veränderung online gemessen und ausgewertet werden kann.

Besonders vorteilhaft ist es, wenn die individuellen Stimuliersignale in einer integrierenden Kugel überlagert werden, die vorzugsweise wenigstens eine Austrittsöffnung für die überlagerten individuellen Stimuliersignale aufweist. Mit Hilfe einer derartigen Licht integrierenden Kugel können die individuellen Stimuliersignale bedingt durch ihre hochdiffuse Reflexion an den Innenwänden der Kugel besonders vorteilhaft überlagert werden und stehen dort bzw. an der vorzugsweise wenigstens einen Austrittsöffnung zur Beaufschlagung des zu testenden Photosensors zur Verfügung.

Gemäß einem ersten alternativen Lösungsgedanken kann die integrierende Kugel mit einem Referenz-Photosensor zur Erfassung eines durch Überlagerung der individuellen Stimuliersignale ausgebildeten, der jeweils resultierenden nominalen Stimuliersignalintensität zugeordneten Stimuliersignal-Gesamtflusses optisch verbunden werden, wobei die nominale Stimuliersignalintensität mit dem Referenz-Photosensor unter vorzugsweise gleichzeitig die Ausgangssignale des zu testenden Photosensor gemessen und zu Auswertungszwecken erfaßt werden, wobei deren Beziehung zueinander ein Maß für die Qualität des zu testenden Photosensors darstellt.

Gemäß einem weiteren bevorzugten Lösungsgedanken des Verfahrens zur Qualitätskontrolle von Photosensoren ist vorgesehen, daß anhand der gemessenen Ausgangssignale des Photosensors die den überlagerten Stimuliersignalintensitäten entsprechenden nominalen Ausgangssignale des zu testenden Photosensors berechnet werden, wobei deren Beziehung zu den gemessenen Ausgangssignalen ein Maß für die Qualität des zu testenden, Photosensors darstellt. Insbesondere ist es anhand dieser Verfahrensweise besonders einfach und effektiv möglich, die integrale Linearität (INL) des zu testenden Photosensors sowie die Gleichmäßigkeit bzw. Homogenität der Antwortfunktionen der individuellen, in einem Photodiodenarray zusammengefaßten Photoelemente zu überprüfen.

Dies kann besonders günstig dadurch erreicht werden, daß nacheinander für mögliche Kombinationen von individuellen Stimuliersignalen die diesen Kombinationen jeweils zugeordneten Ausgangssignale des Photosensors gemessen und zu Auswertungszwecken erfaßt werden, und unter Anwendung eines auf multipler linearer Regression basierenden Algorithmus die wahrscheinlichsten, den den Photosensor tatsächlich beaufschlagenden individuellen Stimuliersignalen zugeordneten individuellen Stimuliersignalintensitäten $Coef_x$ gemäß der Gleichung

$$R = R_0 + Ctl_{0,i}*Coef_0 + Ctl_{1,i}*Coef_1 + Ctl_{2,i}*Coef_2 + ... + Ctl_{n,i}*Coef_n$$

ermittelt werden, wobei R das Ausgangssignal des Photosensors, Ro die dabei ebenfalls berechnete Null-Punkts-Abweichung, $Coef_x$ der die Intensität des individuellen Stimuliersignals x repräsentierende Koeffizient und $Ctrl_{x,i}$ eine Kontrollmatrix für das individuelle Stimuliersignal x darstellt, und wobei anschließend mit Hilfe dieser Gleichung für die mögliche Kombinationen von individuellen Stimuliersignalen die den überlagerten individuellen Stimuliersignalen entsprechenden nominalen Ausgangssignale des zu testenden Photosensors berechnet werden, wobei deren Beziehung zu den bei jeweils gleichen Stimuliersignalintensitäten gemessenen Ausgangssignalen ein Maß für die Linearität des zu testenden Photosensors darstellt und folglich die nominale lineare Signalübertragungscharakteristik des zu testenden Photosensors ermittelt werden kann.

Ein besonders aussagekräftiges und einfach handhabbares Maß für die Linearität des zu testenden Photosensors kann dadurch erhalten werden, daß ein einem karthesischen Koordinatensystem zuordenbarer X-Vektor als dem Quotienten aus den nominalen Ausgangssignalen jeweils für eine bestimmte Kombination von individuellen Stimuliersignalen und den nominalen Ausgangssignalen für die Kombination, bei der sich alle Stimuliersignale gemeinsam überlagern, ermittelt wird und diesem X-Vektor jeweils ein Y-Vektor zugeordnet wird, der dem gemessenen Ausgangssignal des zu testenden Photosensors für die jeweils gleiche bestimmte Kombination von individuellen Stimuliersignalen entspricht und daraus mittels linearer Regression als Regressionsparameter eine Geradensteigung und ein Achsenabschnitt berechnet werden, die ein Maß für die nominale lineare Signalübertragungscharakteristik des zu testenden Photosensors darstellen, die folglich allein mit Hilfe von zwei Kenngrößen, nämlich der Geradensteigung und des Achsenabschnittes charakterisierbar ist.

Das vorstehend beschriebene Verfahren zur Qualitätskontrolle eines Photosensors zur Ermittlung der INL läßt sich auch zur Ermittlung der DNL einsetzen, wenngleich die dabei erzielbare Auflösung begrenzt ist. Jedoch kann dieses einfache und schnelle Verfahren zur Überprüfung der generellen Funktion der Photosensoren und einer ersten Aussonderung von defekten Sensoren herangezogen werden. Die verbleibenden Photosenoren können anschließend in einem alternativen Verfahren auf etwa vorhandene differenzielle Nichtlinearitäten überprüft werden.

Folglich wird die Aufgabe gemäß einem alternativen Lösungsgedanken auch dadurch gelöst, daß der Photosensor mehrere, jeweils individuelle Ausgangs- signale liefernde Photosensorelemente aufweist, die mit Stimuliersignalen mit einer im wesentlichen konstanten relativen örtlichen und konstanten relativen zeitlichen Verteilung ihrer Stimuliersignalintensität unter stetiger Veränderung derselben beaufschlagt werden. Dadurch werden insbesondere günstige Möglichkeiten zur Erfassung und Bestimmung der differenziellen Nichtlinearität derartiger Photosensoren ermöglicht, ohne daß eine genaue Kenntnis der Höhe der Ausgangssignale oder entsprechende Referenzmessungen erforderlich sind. Die örtliche Verteilung der Stimuliersignalintensität über alle Photosesnsorelemente bzw. Pixel kann zwar beliebig sein, sollte aber annähernd homogen sein, um ähnliche Aussteuerungsbeedingungen für alle Photosensorelemente zu schaffen.

Zweckmäßigerweise werden dabei alle Photosensorelemente gleichzeitig mit den Stimuliersignalen beaufschlagt, wodurch sich entsprechende Zeitvorteile bei einem hohen Automatisierungsgrad erreichen lassen.

Vorteilhafterweise werden die Photosensorelemente mit Stimuliersignalen beaufschlagt, deren Stimuliersignalintensität eine über die Photosensorelemente örtlich unterschiedliche Verteilung aufweist. Dabei wird davon ausgegangen, daß die einzelnen Photosensorelemente ähnlich, aber nicht gleich ausgesteuert werden, so daß ein eventuelles, levelabhängiges Fehlverhalten nicht bei allen Pixels auch zeitgleich auftritt. Auf diese Weise können die auftretenden Fehler auch danach unterschieden werden, ob diese durch ein fehlerhaftes Eingangs- signal oder durch eine Defekt des zu testenden Photosensors verursacht sind.

Von besonderem Vorteil ist es, wenn die Ausgangssignale jedes Photosensorelements ohne Beaufschlagung mit den Stimuliersignalen als Offset-Signale gemessen und zugehörige Offset-Signalwerte erfaßt werden, und wenn die Ausgangssignale jedes Photosensorelements bei Beaufschlagung mit Stimuliersignalen als Meßsignale gemessen und zugehörige Meßsignalwerte erfaßt werden, und wenn zur Offset-Korrektur von den Meßsignalwerten jedes Photosensorelements die jeweiligen Offset-Signalwerte subtrahiert und die resultierenden orts- und zeitbezogenen Nominal-Ausgangssignalwerte erfaßt werden, und wenn anschließend die orts- und zeitbezogenen Nominal-Ausgangssignalwerte mit einem nach einem statistischen Verfahren aus diesen Nominal-Ausgangssignalwerten ermittelten ortsbezogenen Intensitätswert normiert werden und wenn von den resultierenden orts- und zeitbezogenen Datenwerten jeweils ein nach einem statistischen Verfahren aus diesen Datenwerten ermittelter zeitbezogener Intensitätswert subtrahiert wird. Dadurch kann unter Berücksichtigung des verbleibenden Rauschens, beispielsweise durch Festlegung bestimmter Schwellwerte die diese über- bzw. unterschreitenden Abweichungen aufgrund von differenziellen Nichtlinearitäten nach Lage und Größe dieser Abweichungen für jedes Photosensorelement bestimmt werden. Dieses Verfahren macht sich die Statistik und die Wahrscheinlichkeitsrechnung zu Nutze, weil beim Testen von Photosensoren mit einer Mehrzahl von gleichartigen Elementen Abweichungen vom Normalverhalten wirkungsvoll aufgezeigt werden können. Aus redundanten Informationen werden der örtliche und der zeitliche Verlauf der Intensitäten aus den Meßdaten ermittelt, so daß diese Informationen nicht auf einem anderen, aufwendigeren und/oder fehlerbehafteten Weg ermittelt werden müssen.

Aus Gründen einer höheren statistischen Sicherheit ist es zweckmäßig die vorstehend beschriebenen Schritte in der angegebenen Reihenfolge auszuführen, da in der Regel weniger, auf die Photosensorelemente bezogene, örtliche Meßdaten vorliegen werden als zeitliche Meßdaten. Es versteht sich jedoch, daß diese Schritte auch in umgekehrter Reihenfolge ausgeführt werden können.

Zweckmäßigerweise wird der ortsbezogene Intensitätswert für jedes Photosensorelement (71, 72, 73) aus dem Mittelwert der Nominal-Ausgangssignal-Werte des jeweiligen Photosensorelements über alle Meßzeiten berechnet und der zeitbezogene Intensitätswert wird für jede Meßzeit aus dem Median-Wert der resultierenden orts- und zeitbezogenen Datenwerte der jeweiligen Meßzeit berechnet. Als Bezugsgröße für die Berechnung des ortsbezogenen Intensitätswerts hat sich die Bildung des Mittelwertes aus statistischen Gründen für sinnvoll erwiesen, weil davon auszugehen ist, daß zu gleichen Zeitpunkten nur bei einzelnen Photosensorelementen Nichtlinearitätsfehler auftreten. Als Bezugsgrößen für die Berechnung des zeitbezogenen Intensitätswerts kommen grundsätzlich die Mittelwertbildung, die Medianbildung oder die Ermittlung des Maximums aus der Häufigkeitsverteilung der Meßwerte aller ortsbezogenen Datenwerte zu jedem Zeitpunkt in Frage und für den idealen Fall, daß keine differentiellen Nichtlinearitäten vorliegen, führen diese Methoden alle zu dem gleichen Ergebnis. Jedoch für den Fall, daß den Meßdaten differentielle Nichtlinearitäten überlagert sind, können sich erhebliche Unterschiede ergeben, so daß die Auswahl des geeigneten Verfahrens von entscheidender Bedeutung ist. Die Mittelwertbildung ist hier nicht geeignet, da viele Fehler den Mittelwert zu stark beeinflussen und folglich das Ergebnis verfälschen würden. Das beste Ergebnis liefert die Verwendung des Maximums aus der Ermittlung der Häufigkeitsverteilung, weil davon ausgegangen werden kann, daß aufgrund kontrollierter Herstellungsverfahren die Häufigkeit nicht fehlerbehafteter Daten jede andere Häufigkeit übertrifft bzw. daß gravierende Defekte im Vorfeld durch einfachere Testverfahren abgefangen wurden. Dieses Rechenverfahren ist jedoch zugleich auch das aufwendigste. Es hat sich gezeigt, daß die Verwendung des Median-Wertes einen guten Kompromiß darstellt, da in der Praxis die Medianbildung der Ermittlung der Häufigkeitsverteilung ziemlich nahe kommt.

Bei Photosenorelementen, welche digitale Ausgangssignale mit bestimmten Quantisierungsstufen liefern, ist es zweckmäßig, die zeitliche Veränderung der Stimuliersignalintensiät derart zu wählen, daß eine Anzahl bzw. Mehrzahl von Meßwerten pro Quantisierungsstufe erfaßt werden. Dadurch ist eine der Rauschunterdrückung dienende Filterung der Meßdaten und eine anschließende Meßdatenreduktion möglich, um genaue Testergebnisse bei vergleichsweise schnellen Testzykluszeiten erzielen zu können. Um die statistischen Unsicherheiten zu reduzieren, wird zweckmäßigerweise bei der Messung der Offset-Signale der Photosensorelemente (71, 72, 73) eine entsprechend hohe, vorzugsweise größere Anzahl von Meßwerten erfaßt, die dann gemittelt werden.

Zur Reduktion und Minimierung von statistischen Unsicherheiten bzw. Abweichungen, insbesondere des Rauschens der Meßwerte kann vor oder nach der Offset-Korrektur eine Filterung der Ausgangssignale, beispielsweise mittels FIR- oder IIR-Filtern durchgeführt und die resultierenden Datenwerte erfaßt werden. Dabei wird die Filterung derart durchgeführt, daß dabei die regelmäßigen Fehler, das heißt der durch differentielle Nichtlinearitäten bedingten Unstetigkeiten der Eingangs-/Ausgangsübertragungsfunktion des zu testenden Photosensors beibehalten werden. Zur Reduktion der Datenmenge und der Testzeiten wird zweckmäßigerweise anschließend eine Reduktion der Datenwerte, vorzugsweise auf vier Datenwerte pro Quantisierungsstufe durchgeführt.

Gemäß einer vorteilhaften Ausführungsvariante des Verfahrens werden die Photosensorelemente des zu testenden Photosensors mit wenigstens zwei unabhängig voneinander steuerbaren, sich überlagernden individuellen Stimuliersignalen individueller Stimuliersignalintensität beaufschlagt.

Besonders vorteilhaft ist es, wenn die individuellen Stimuliersignale in einer integrierenden Kugel überlagert werden, die vorzugsweise wenigstens eine Austrittsöffnung für die überlagerten individuellen Stimuliersignale aufweist. Dadurch werden im Hinblick auf den örtlichen und zeitlichen Verlauf der Stimuliersignalintensitäten günstige Möglichkeiten für eine Datenaufbereitung zur Bestimmung der DNL geschaffen.

Hierzu ist es zweckmäßig, wenn wenigstens ein erstes Stimuliersignal der unabhängig voneinander steuerbaren Stimuliersignale über der Zeit stetig verändert und mit einem weiteren individuellen Stimuliersignal überlagert wird, wobei das weitere Stimuliersignal von einem ersten, vorzugsweise der Signalintensität Null entsprechenden Schaltzustand in einen zweiten Schaltzustand mit einer größeren Signalintensität überführt wird. Folglich kann die Generierung der sich stetig ändernden Stimuliersignalintensität in mehrere Abschnitte unterteilt werden, indem dem sich stetig ändernden Stimuliersignal weitere, in Stufen schaltbare Stimuliersignale überlagert werden. Dadurch können die Anforderungen an die Auflösung des sich stetig ändernden Stimuliersignals reduziert werden, so daß eine gute Auflösung der das erste Stimuliersignal erzeugenden Stimuliersignalquelle in jedem Bereich möglich ist. Dabei ist es unerheblich, in welcher Abstufung und in welcher Reihenfolge die schaltbaren Stimuliersignale zugeschaltet werden. Ferner muß die Messung nicht zeitlich zusammenhängend sein, sondern kann von Abschnitt zu Abschnitt zeitlich unterbrochen werden. Es ist ferner unerheblich, ob das veränderliche Stimuliersignal stetig zunehmend oder stetig abnehmend überlagert wird.

Zweckmäßigerweise werden die individuellen Stimuliersignale jeweils von einer Stimuliersignalquelle erzeugt, die jeweils einen Aussteuerbereich von möglichen Stimuliersignalintensitäten aufweist, und wobei der Aussteuerbereich der ersten Stimuliersignalquelle größer ist als der Aussteuerbereich der weiteren Stimuliersignalquelle und dadurch deren Aussteuerbereich überlappt. Bei einer Verfahrensführung mit ansteigender Stimuliersignalintensität wird der Aussteuerbereich der weiteren Signalquelle nach oben überlappt bzw. bei einer Versuchsführung mit abfallender Stimuliersignalintensität wird der Aussteuerbereich der weiteren Signalquelle nach unten überlappt. Auf diese Weise wird sichergestellt, daß nicht versehentlich eine Unstetigkeitsstelle induziertwird, die ansonsten fälschlicherweise als ein Defekt des Photosensors interpretiert würde.

Die erfindungsgemäße Vorrichtung zur Durchführung des Verfahrens zur Qualitätskontrolle eines Photosensors weist eine Stimuliersignalquelle zur Erzeugung von den Photosensor beaufschlagenden, mit unterschiedlicher Stimuliersignalintensität einstellbaren Stimuliersignalen und eine mit der Stimuliersignalquelle gekoppelte Kontrolleinheit zur Einstellung der unterschiedlichen Stimuliersignalintensitäten sowie eine mit dem zu testenden Photosensor in Verbindung bringbaren Meßdatenerfassungseinheit zur Messung und Erfassung der Ausgangssignale des Photosensors auf, wobei die Stimuliersignale als wenigstens zwei unabhängig voneinander steuerbare, sich überlagernde individuelle Stimuliersignale mit einer jeweils individuellen Stimuliersignalintensität ausgebildet sind. Dadurch kann ein hochspezialisiertes Stimuliersignal zur direkten Qualitätskontrolle der zu testenden Photosensoren zur Verfügung gestellt werden. Mit Hilfe dieser Vorrichtung ist eine hochautomatisierte Qualitätssicherung der zu testenden Photosensoren in Verbindung mit Tests auf "Wafer-Niveau" möglich, bei deutlich geringeren Meßunsicherheiten gegenüber bisherigen Testanordnungen zur Qualitätssicherung von Photosensoren, so daß auch entsprechend genauere Testresultate erzielbar sind.

Zweckmäßigerweise sind wenigstens zwei unabhängig voneinander steuerbare Stimuliersignalquellen zur Erzeugung der individuellen Stimuliersignale vorgesehen. Dadurch ist ein besonders einfacher und kostengünstiger Testaufbau ermöglicht.

Zweckmäßigerweise ist die Stimuliersignalquelle bzw. sind die Stimuliersignalquellen mit Leuchtdioden ausgebildet, wobei vorzugsweise jede Leuchtdiode Licht einer im wesentlichen gleichen Wellenlänge emittiert. Folglich läßt sich in vorteilhafter Weise eine Einheit aus mehreren Leuchtdioden schaffen, wobei zur Überprüfung der spektralen Antwortfunktion der zu testenden Photosensoren entweder mehrere derartiger Einheiten mit mehreren Leuchtdioden vorgesehen sein können oder alternativ innerhalb der einen Einheit mit Leuchtdioden mehrere Untereinheiten mit mehreren Leuchtdioden, wobei die in den einzelnen Einheiten bzw. Untereinheiten zusammengefaßten Leuchtdioden Licht mit jeweils einer bestimmten, d.h. im wesentlichen gleichen Wellenlänge emittieren. Zweckmäßigerweise können die Einheiten bzw. Untereinheiten mit roten, gelben, grünen und/oder blauen Leuchtdioden ausgebildet sein.

Besonders vorteilhaft ist es, wenn die Stimuliersignalquelle mit einer die individuellen Stimuliersignale integrierenden Kugel verbunden ist, die vorzugsweise wenigstens eine Austrittsöffnung für die überlagerten individuellen Stimuliersignale aufweist. Die integrierende Kugel ist zweckmäßigerweise als Hohlkugel ausgebildet und weist eine Innenbeschichtung mit einem nahezu perfekt diffusen bzw. lambert'schen Material auf und ist durch eine besonders hohe Reflexionsstärke gekennzeichnet. Eine derartige integrierende Kugel ermöglicht eine besonders günstige homogene Überlagerung der individuellen Stimuliersignale bedingt durch die hochdiffuse Reflexionscharakteristik der Kugelinnenwände und ermöglicht eine dementsprechend günstige Beaufschlagung des zu testenden Photosensors mit den in der integrierenden Kugel überlagerten individuellen Stimuliersignale.

Vorteilhafterweise ist die integrierende Kugel mit einem Referenz-Photosensor zur Erfassung eines durch Überlagerung der individuellen Stimuliersignale ausgebildeten, der jeweils resultierenden Stimuliersignalintensität zugeordneten Stimuliersignal-Gesamtflusses optisch verbunden ist, der vorzugsweise derart angeordnet ist, daß er nur mit den überlagerten, vorzugsweise nur von der integrierenden Kugel reflektierten, individuellen Stimuliersignalen, also nicht direkt mit den individuellen Stimuliersignalen beaufschlagt wird. Mit Hilfe dieses Referenz-Photosensors ist es zunächst möglich zu prüfen, ob die gewünschte lineare Beziehung der überlagerten individuellen Stimuliersignale bzw. deren Stimuliersignalintensitäten eingehalten ist. Ferner ist es mit Hilfe des Referenz-Photosensors möglich, die nominale Stimuliersignalintensität zu messen und zu den vorzugsweise gleichzeitig gemessenen Ausgangssignalen des zu testenden Photosensors in Beziehung zu setzen und bereits auf diese Weise ein Maß für die Qualität des zu testenden Photosensors zu erhalten. Auf diese Weise läßt sich das nach dem Stand der Technik erforderliche mehrfache wechselseitige Ein- und Ausbauen des Referenz-Photosensors und des zu testenden Photosensors vermeiden. Allerdings sind für diese Art der Qualitätskontrolle mehrere Einzelmessungen erforderlich, so daß die Meßergebnisse noch immer mit einer relativ großen statistischen Unsicherheit behaftet sein können.

Zweckmäßigerweise ist die integrierende Kugel mit wenigstens einer optischen Faser zur Aufnahme der überlagerten individuellen Stimuliersignale und ihrer Weiterleitung zu dem zu testenden Photosensor optisch verbunden. Dies ermöglicht eine räumliche vorteilhafte Trennung des Ortes der Generierung der Stimuliersignale von dem eigentlichen Meßort des im Rahmen des Herstellungsprozesses zu testenden Photosensors.

Es ist ferner zweckmäßig, wenn ein Strahlformungsmittel, vorzugsweise eine optische Sammellinse zur Fokussierung der überlagerten individuellen Stimuliersignale auf der Oberfläche des zu testenden Photosensors vorgesehen ist. Dabei kann das Stahlformungsmittel direkt mit demjenigen Ende der optischen Faser verbunden sein, das zu dem zu testenden Photosensor weist oder es kann zwischen diesem Ende der optischen Faser und dem zu testenden Photosensor angeordnet sein.

Vorstehende Maßnahmen tragen sowohl einzeln als auch in Kombination untereinander zu exakteren Testergebnissen bei kürzeren Testzykluszeiten und einem hohen Automatisierungsgrad sowie die Möglichkeit zur Durchführung von Tests direkt auf ,,Wafer-Niveau" bei.

Weitere Merkmale, Gesichtspunkte und Vorteile der Erfindung sind dem nachfolgenden, anhand einer Figur abgehandelten Beschreibungsteil entnehmbar.

Ein bevorzugtes Ausführungsbeispiel der Erfindung ist nachfolgend anhand einer Figur beschrieben. Es zeigt:

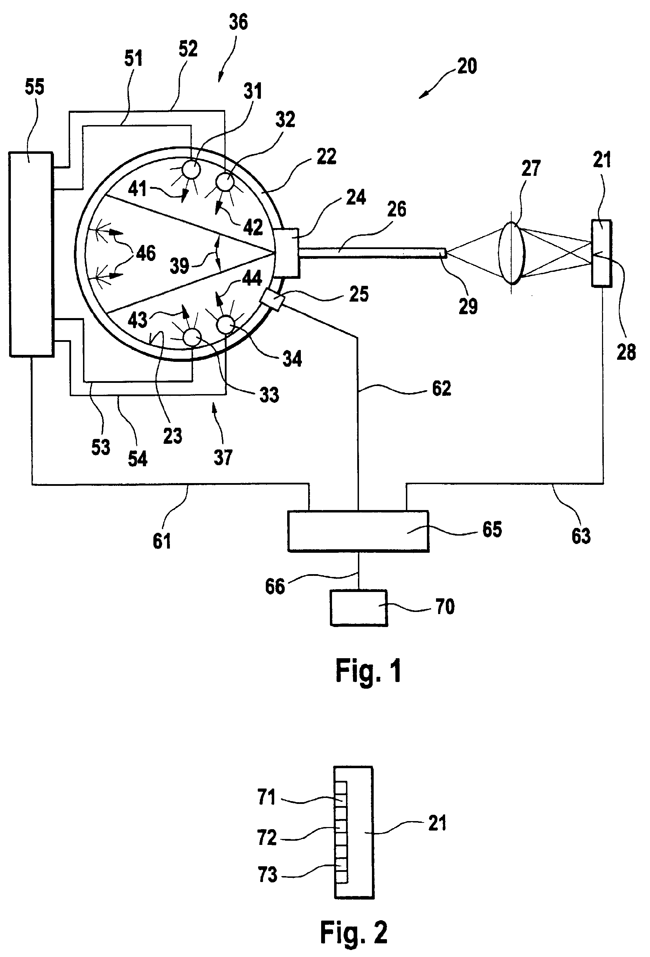

Fig. 1     eine schematische Ansicht der Vorrichtung zur Durchführung des Verfahrens zur Qualitätskontrolle von Photosensoren.

Fig. 2     eine schematische Darstellung eines Querschnitts eines Photosensors mit mehreren Photosensorelementen;

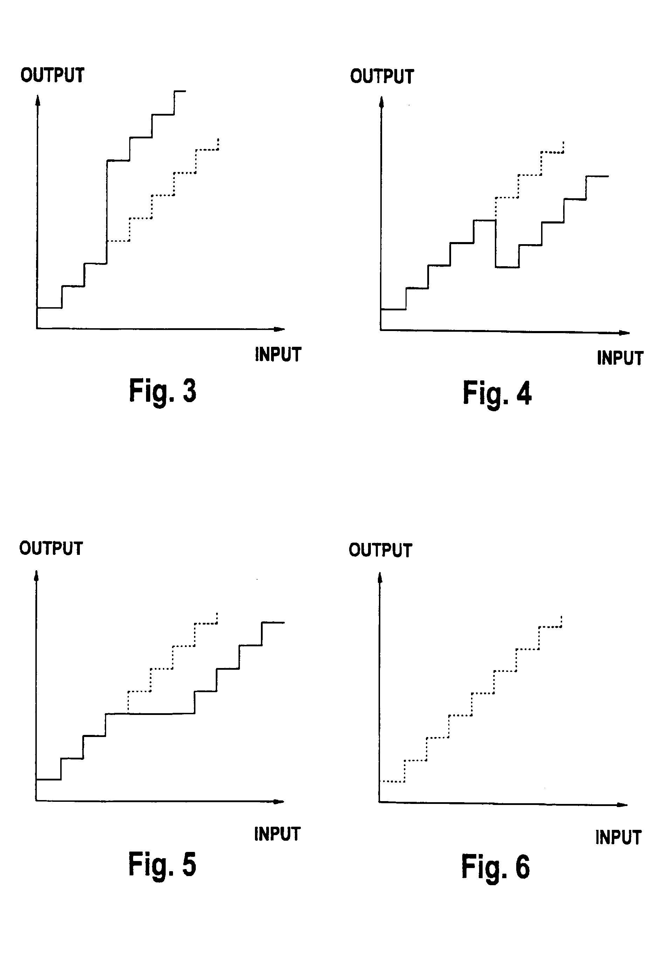

Fig. 3     die Eingangs-/Ausgangs-Signalübertragungsfunktion eines Photosensors, die eine differentielle Nichtlinearität in der Form von ,,missings codes" aufweist;

Fig. 4     die Eingangs-/Ausgangs-Signalübertragungsfunktion eines Photosensors, die eine differentielle Nichtlinearität in der Form von ,,double codes" aufweist;

Fig. 5     die Eingangs-/Ausgangs-Signalübertragungsfunktion eines Photosensors, die eine differnentielle Nichtlinearität in der Form einer ,,dead zone" aufweist;

Fig. 6     die ideale Eingangs-/Ausgangs-Signalübertragungsfunktion eines Photosensors, also ohne differentielle Nichtlinearitäten;

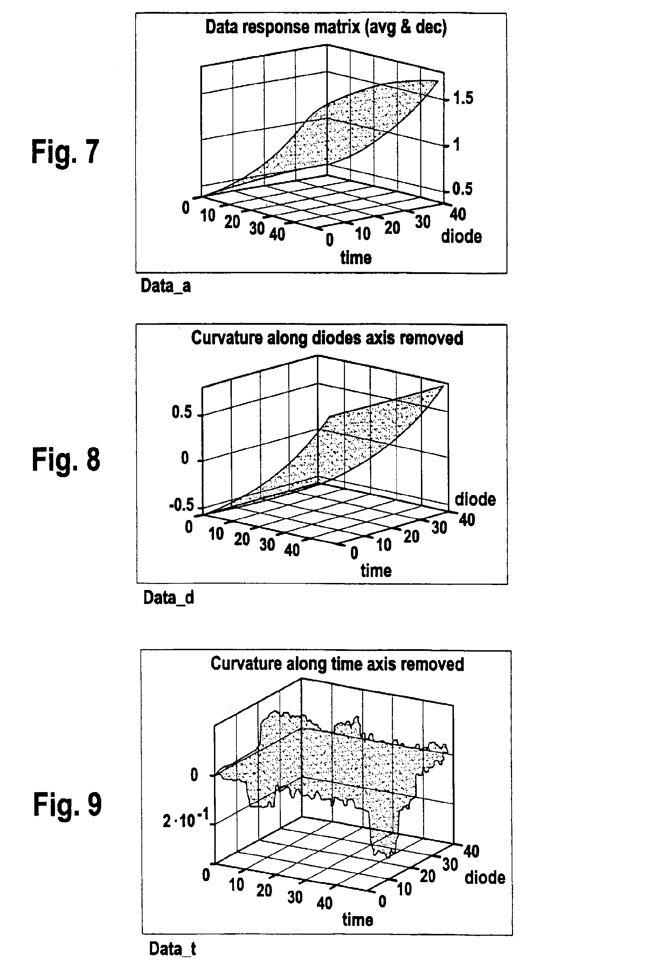

Fig. 7     eine dreidimensionale graphische Darstellung einer Intensitätsverteilungs-Matrix über der Zeit und über den orstverschiedenen Photosensorelementen, vor der Durchführung einer Offset-Korrektur;

Fig. 8     eine dreidimensionale graphische Darstellung einer Intensitätsverteilungs-Matrix über der Zeit und über den orstverschiedenen Photosensorelementen, nach Durchführung einer Offset-Korrektur und nach Herausrechnen des örtlichen Kurvenverlaufes der Intensitätsverteilungsfunktion über die Photosensorelemente;

Fig. 9       eine dreidimensionale graphische Darstellung einer Intensitätsverteilungs-Matrix gemäß Fig. 8 nach Herausrechnen des zeitlichen Kurvenverlaufes der Intensitätsverteilungsfunktion;

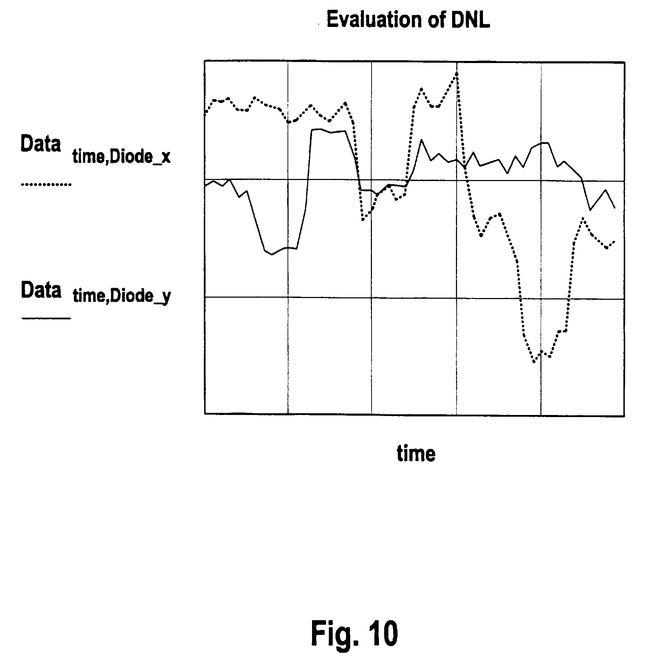

Fig. 10       die über der Zeit aufgetragene Intensitätsverteilungsfunktionen zweier Photosensorelementet nach der Datenaufbereitung.

Die Vorrichtung 20 zur Qualitätskontrolle des zu testenden Photosensors 21 umfaßt die Licht integrierende Kugel 22, die Stimuliersignalquellen 31, 32, 33, 34, den Referenz-Sensor 25, die optische Faser 26, die Sammellinse 27, die Kontrolleinheit 55, die Meßdatenerfassungseinheit 65 sowie die Recheneinheit 70.

Die integrierende Kugel 22 ist als Hohlkugel ausgebildet und weist eine Innenoberfläche 23 auf, die eine nahezu perfekte diffuse Rückstrahlung bzw. Lambert'sche Eigenschaften aufweist und ermöglicht eine extrem hohe Reflexion. Die Licht integrierende Kugel 22 ermöglicht aufgrund der hochdiffusen Reflexionscharakteristik ihrer Innenwände, daß das über die individuellen Stimuliersignalquellen 31, 32, 33, 34 in die Kugel 22 abgestrahlte Licht homogen über die innere Oberfläche 23 verteilt wird und ermöglicht folglich eine nahezu perfekte Überlagerung der durch die Stimuliersignalquellen 31, 32, 33, 34 erzeugten individuellen Stimuliersignale 41, 42, 43, 44.

Das von den individuellen Stimuliersignalquellen 31, 32, 33, 34 emittierte Licht in Form der individuellen Stimuliersignale 41, 42, 43, 44 wird in der integrierenden Kugel 22 nahezu perfekt diffus überlagert und in Form der überlagerten individuellen Stimuliersignale 46 von der Oberfläche 23 der integrierenden Kugel 22 nach innen reflektiert und steht an der Austrittsöffnung 24 der integrierenden Kugel 22 zur Beaufschlagung des zu testenden Photosensors 21 zur Verfügung. Die gleichen Verhältnisse gelten auch für den in der Wand der integrierenden Kugel 22 angeordneten Referenz-Photosensor 25, der zu Referenz- und Kalibrierzwecken dient.

Die individuellen Stimuliersignalquellen 31, 32, 33, 34 sind derart angeordnet bzw. mit nicht in der Fig. 1 gezeigten Blenden versehen, daß die Austrittsöffnung 24 und der Referenz-Photosensor 25 nicht direkt mit den individuellen Stimuliersignalen 41, 42, 43, 44, sondern nur mit den überlagerten individuellen Stimuliersignalen 46 beaufschlagt werden.

Im Bereich der Austrittsöffnung 24 ist die integrierende Kugel 22 mit der optischen Faser 26 zur Aufnahme der überlagerten individuellen Stimuliersignale 46 und ihrer Weiterleitung zu dem zu testenden Photosensor 21 optisch verbunden. Die optische Faser 26 ist im Bereich ihres freien Endes 29 mit einer als Strahlformungsmittel dienenden optischen Sammellinse 27 zur Fokussierung der überlagerten individuellen Stimuliersignale 46 in Form eines homogen auf der Oberfläche 28 des zu testenden Photosensors 21 verteilten Lichtflecks versehen. Die optische Faser 26 weist eine durch den Winkel 39 veranschaulichte numerische Apertur auf, die auf die Innenraumverhältnisse der integrierenden Kugel 22 und die Anordnung der Stimuliersignalquellen 31, 32, 33, 34 abgestimmt gestaltet ist.

Die individuellen Stimuliersignalquellen 31, 32, 33, 34 sind zu den Einheiten 36 und 37 zusammengefaßt, wobei die Einheit 36 mit den Stimuliersignalquellen 31 und 32 und die Einheit 37 mit den Stimuliersignalquellen 33 und 34 ausgebildet ist. Die in den Einheiten 36 bzw. 37 zusammengefaßten Stimuliersignalquellen 31, 32; 33, 34 sind mit einem Bündel bzw. einer Einheit von Leuchtdioden ausgebildet. Diese sind durch in der Fig. 1 nicht gezeigte Öffnungen in der integrierenden Kugel 20 in diese eingebracht und entlang der Kugelinnenwand angeordnet. Die Leuchtdioden ermöglichen die Emission von Licht, also elektromagnetische Wellen, wobei deren Intensität über die Regelung bzw. Einstellung unterschiedlicher elektrischer Spannungswerte definiert variiert werden kann. Die jeweils innerhalb der Gruppen 36 bzw. 37 angeordneten Leuchtdioden emittieren Licht mit einer unterschiedlichen Wellenlänge, innerhalb der einzelnen Einheiten 36 bzw. 37 jedoch Licht mit im wesentlichen gleicher Wellenlänge. Dadurch ist es möglich, die Tests auch bei unterschiedlichen Wellenlängen durchzuführen ohne daß hierzu irgendwelche Umbauarbeiten vorgenommen werden müssen. Vorteilhafterweise sind in der integrierenden Kugel 22 neben der in Fig. 1 gezeigten Einheiten 36 und 37 von Stimuliersignalquellen 31, 32; 33, 34 noch wenigstens zwei weitere derartige Einheiten vorgesehen. Diese sind zweckmäßigerweise jeweils mit blauen, grünen, gelben sowie roten Leuchtdioden ausgebildet. Jede Einheit 36, 37 besteht aus einer Mehrzahl von Gruppen, vorzugsweise jeweils sieben Gruppen, die jeweils eine Vielzahl von Stimuliersignalquellen 31, 32; 33, 34 umfassen, wobei die Gruppen mit binär oder beliebig anderer Gewichtung ausgebildet und individuell ansteuerbar sind.

Die Stimuliersignalquellen 31, 32, 33, 34 sind über eine Leitung 51, 52, 53, 54 mit der Kontrolleinheit 55 gekoppelt. Dabei ist jede Stimuliersignalquelle 31, 32, 33, 34 mit einer einstellbaren Strom- bzw. mit einer einstellbaren Spannungsquelle und einem elektrischen Widerstand gekoppelt. Mit Hilfe dieser Widerstände kann der durch die jeweilige Leuchtdiode hindurchfließende Strom bestimmt bzw. eingestellt werden so daß folglich ein Maß für die jeweilige Stimuliersignalintensität bzw. für den durch die einzelne Stimuliersignalquelle 31, 32, 33, 34 emittierten Lichtstrom zur Verfügung steht. Die Kontrolleinheit 55 umfaßt ferner ein System elektronischer Schalter, mit deren Hilfe jede einzelne der individuellen Stimuliersignalquellen 31, 32, 33, 34 unabhängig von allen anderen Stimuliersignalquellen ein- bzw. ausgeschaltet werden können. Dabei sind auch zwei oder mehr Schaltzustände, auch mit zwischen logisch 0 (ausgeschaltet) und logisch 1 (eingeschaltet) einstellbaren Stimuliersignalinensitäten jeder einzelnen Stimuliersignalquele 31, 32, 33, 34 möglich. Ferner kann mit Hilfe der Kontrolleinheit 55 auch jede einzelne individuelle Stimuliersignalquelle 31, 32, 33, 34 derart mit Strom versorgt werden, daß die individuelle Stromstärke kontinuierlich, vorzugsweise linear ansteigt bzw. abfällt.

Die Kontrolleinheit 55 ist über die Leitung 61 und der Referenz-Sensor 25 ist über die Leitung 62 und der zu testende Photosensor 21 ist über die Leitung 63 mit der Meßdatenerfassungseinheit 65 gekoppelt. Diese dient auch zur Messung und Erfassung bzw. Speicherung der Ausgangssignale des Photosensors 21 bzw. des Referenz-Photosensors 25 und dient auch zur Erfassung der unterschiedlichen Einschaltzustände bzw. Schaltkombinationen der durch die Kontrolleinheit 55 gesteuerten bzw. geregelten individuellen Stimuliersignalquellen 31, 32, 33, 34. Die Meßdatenerfassungseinheit 65 ist über die Leitung 66 mit der Recheneinheit 70 gekoppelt. Diese dient zur Auswertung der Einstell- und Meßdaten, insbesondere zur Berechnung der nach dem erfindungsgemäßen Verfahren berechneten Ergebnismatrices.

Der zu testende Photosensor 21 kann beispielsweise ein einzelnes Photoelement bzw. eine einzelne Photodiode, eine Anordnung einer Vielzahl von Photodioden auch in Form eines Photodiodenarrays, also einer linearen Anordnung von Photoelementen bzw. einer Diodenzeile sein oder eine Matrix bestehend aus einer Vielzahl von Photoelementen bzw. Photodioden. Eine schematische Darstellung eines vergrößerten Querschnitts durch einen Photosensor 21 mit mehreren Photosensorelementen 71, 72, 73 zeigt die Figur 2.

Nachfolgend wird das Verfahren zur Qualitätskontrolle des zu testenden Photosensors 21 gemäß dem ersten alternativen Lösungsgedanken näher beschrieben, wobei dieses auf der Annahme gründet, daß der Lichtfluß von mehreren Lichtquellen bzw. Stimuliersignalquellen 31, 32, 33, 34 linear überlagerbar ist. Dies bedeutet, daß der Gesamtfluß einer Auswahl von Stimuliersignalquellen 31, 32, 33, 34 der Summe des Signalflusses bzw. der Stimuliersignalintensität jeder einzelnen der individuellen Stimuliersignalquellen 31, 32, 33, 34 entspricht. Dies ist dann der Fall, wenn Interaktionen zwischen den verschiedenen individuellen Stimuliersignalquellen 31, 32, 33, 34 verhindert werden. Derartige Interaktionen können thermischer, elektrischer oder mechanischer Art sein. Eine thermische Interaktion kann auftreten, wenn der Wärmefluß der jeweiligen Stimuliersignalquelle 31, 32, 33, 34 die Strahlenemission einer benachbarten Stimuliersignalquelle 31, 32, 33, 34 beeinflußt oder wenn über die Beeinflussung des Temperaturkoeffizienten eine räumliche Lageverschiebung benachbarter Stimuliersignalquellen auftritt. Elektrische Interaktionen können beispielsweise dadurch induziert werden, daß der elektrische Stromverbrauch einer individuellen Stimuliersignalquelle 31, 32 33, 34 die elektrischen Anschlußbedingungen der anderen Stimuliersignalquellen 31, 32, 33, 34 beeinflußt. Mechanische Interaktionen können beispielsweise durch mechanische Beanspruchung von funktionellen Elementen und eine dadurch resultierende Beeinflussung der optischen Übertragungscharakteristik auftreten. Derartige Interaktionseffekte können durch die Verwendung von Leuchtdioden als Stimuliersignalquellen 31, 32, 33, 34 vermieden werden. Die Leuchtdioden verfügen über eine sehr kurze Ansprechzeit und ihr Betrieb ist mit keiner bzw. mit einer vernachläßigbar kleinen Wärmeentwicklung verbunden. Ferner lassen sich Leuchtdioden besonders günstig direkt elektrisch ansteuern, indem geeignete elektronische Schaltelemente eingesetzt werden. Dadurch lassen sich die Tests zur Qualitätskontrolle der Photosensoren 21 in sehr kurzer Zeit durchführen und die Testprogramme können in ihrer zeitlichen Abfolge optimiert geplant und vollautomatisch elektronisch gesteuert bzw. geregelt durchgeführt werden. Unter der Annahme einer idealen linearen Überlagerung der durch die individuellen Stimuliersignalquellen 31, 32, 33, 34 erzeugten individuellen Stimuliersignalen 41, 42, 43, 44 läßt sich für den verallgemeinerten Fall von ,,n" ein bzw. ausschaltbaren Stimuliersignalquellen, der durch diese generierte Stimuliersignalfluß bzw. die entsprechende Stimuliersignalintensität als Funktion der jeweils eingeschalteten Stimuliersignalquellen darstellen. Dabei wird in den nachfolgenden Beispielen der Einfachheit halber jeweils von den logischen Schaltzuständen 0 für ausgeschaltet und 1 für eingeschaltet, ausgegangen. Es versteht sich jedoch, daß die Anwendung des Algorithmus bzw. des Verfahrens nicht auf diese beiden Schaltzustände beschränkt ist, sondern daß beliebige diskrete Schaltzustände jeder einzelnen individuellen Stimuliersignalquelle 31, 32, 33, 34 erfaßbar bzw. behandelbar sind. Für den zuvor beschriebenen Ansatz kann der durch Überlagerung der individuellen Stimuliersignalquellen gebildete Stimuliersignalfluß bzw. die resultierende Stimuliersignalintensität $I_i$ mit Hilfe der folgenden Gleichung beschrieben werden:

$$I_i = Ctl_{0,i} * LS_0 + Ctl_{1,i} * LS_1 + Ctl_{2,i} * LS_2 + ... + Ctl_{n,i} * LS_n$$

wobei $LS_x$ der Lichtfluß bzw. die Stimuliersignalintensität der Stimuliersignalquelle x im Inneren der integrierenden Kugel 22 ist, die mit dem ReferenzPhotosensor 25 gemessen wird, und wobei $Ctl_{x,i}$ ein Kontroll-Parameter für die individuelle Stimuliersignalquelle x darstellt mit $Ctl_{x,i} = \{0,1\}$, so daß mit $Ctl_{x,i} = 0$ der ausgeschaltete Zustand und mit $Ctl_{x,i} = 1$ der eingeschaltete Zustand charakterisiert ist.

Unter Berücksichtigung von "n" Stimuliersignalquellen mit den beiden Schaltzustände "Ein" bzw. "Aus" können zwei $2^n$ verschiedene Stimuliersignalintensitäten generiert werden. Die Signalantwort, d.h. das Ausgangssignal des zu testenden Photosensors 21 bzw./und des Referenz-Sensors 25, gemessen für alle möglichen Kombinationen von Schaltzuständen der individuellen Stimuliersignalquellen 31, 32, 33, 34, repräsentiert ein Ergebnismatrixsystem bestehend aus einem linearen Gleichungssystem von $2^n$-Gleichungen mit "n" Unbekannten.

Mit Hilfe der obigen Gleichung und unter Verwendung des Referenz-Photosensors 25 kann auch die lineare Beziehung der durch Überlagerung der individuellen Stimuliersignale 41, 42, 43, 44 gebildeten überlagerten individuellen Stimuliersignale 46 geprüft werden, indem die wahrscheinlichsten, den den Referenz-Photosensor 25 beaufschlagenden individuellen Stimuliersignalen zugeordneten individuellen Stimuliersignalintensitäten $LS_x$ mit Hilfe eines auf multipler linearer Regression basierenden mathematischen Algorithmus berechnet und ausgewertet werden.

Eine erste Möglichkeit zur verbesserten Qualitätskontrolle eines zu testenden Photosensors 21 ist mit Hilfe des in der integrierenden Kugel 22 angeordneten Referenz-Photosensors 25 selbst möglich. Dabei können unter Variation der durch die Stimuliersignalquellen 31, 32, 33, 34 erzeugten individuellen Stimuliersignale 41, 42 43, 44 die resultierenden überlagerten Stimuliersignale 46 mit dem Referenz-Photosensor 25 und vorzugsweise gleichzeitig mit dem zu testenden Photosensor 21 gemessen werden. Dabei lassen sich für jeden einzelnen Meßpunkt die Korrelationen der durch den Referenz-Photosensor 25 gemessenen Ist-Werte der überlagerten individuellen Stimuliersignale 46 mit den bei gleicher überlagerter Stimuliersignalintensität bzw. gleichzeitig gemessenen Ausgangssignalen des zu testenden Photosensos 21 bilden und folglich Aussagen über die jeweilige Qualität des zu testenden Photosensors 21 treffen. Diese Vorgehensweise hat neben den vorstehend beschriebenen Vorteilen jedoch den Nachteil, daß die Meßwerte bei einer hohen Anzahl von einzelnen Meßpunkten mit einer dementsprechend hohen Unsicherheit gemessen werden, so daß die Meß- bzw. Testgenauigkeit noch nicht vollständig befriedigend ist. Aus diesem Grunde wird das nachfolgend beschriebene Verfahren zur Qualitätskontrolle des Photosensors 21 bevorzugt.

Bei diesem Verfahren werden direkt die Ausgangssignale des zu testenden Photosensors 21 herangezogen, um die wahrscheinlichsten, den den Photosensor 21 tatsächlich beaufschlagenden individuellen Stimuliersignalen zugeordneten individuellen Stimuliersignalintensitäten zu berechnen. Dabei läßt sich zunächst der Lichtfluß bzw. die Stimuliersignalintensität, die ausgehend von der integrierenden Kugel 22 tatsächlich beim zu testenden Photosensor 21 zur Verfügung steht, durch die Gleichung

$$FluxDUT_i = k_0 * I_i,$$

darstellen, wobei $k_0$ der optische Übertragungsfaktor der Vorrichtung ist. Dieser Faktor wird einmalig als das Verhältnis derjenigen Stimuliersignalintensitäten bestimmt, die mit dem Referenz-Photosensor 25 und einem Kalibrier-Sensor gemessen werden, der an dem entsprechenden Ort bzw. Position des zu testenden Photosensors 21 positioniert wird.

Ausgehend von der vorstehenden Gleichung kann deshalb das Ausgangssignal des zu testenden Photosensors 21 mit der nachfolgenden Gleichung berechnet werden:

$$R_i = k_0 * k_r * [Ctl_{0,i} * LS_0 + Ctl_{1,i} * LS_1 + Ctl_{2,i} * LS_2 + ... + Ctl_{n,i} * LS_n] + R_0$$

wobei $k_r$ der relative Antwortfaktor des zu testenden Photosensors 21 und $R_0$ die dabei ebenfalls berechnete Null-Punkts-abweichung sind. Der relative Antwortfaktor $k_r$ muß ebenfalls nur einmalig bestimmt werden.

Werden in der vorstehenden Gleichung die Stimuliersignalintensitäten $LS_x$ der individuellen Stimuliersignalquellen ersetzt durch

$$LS_x = Coef_x \text{ durch } (k_0 * k_r)$$

dann läßt sich das Ausgangssignal R des Photosensors 21 durch die nachfolgende Gleichung beschreiben:

$$R_i = R_o + Ctl_{0,i} * Coef_0 + Ctl_{1,i} * Coef_1 + Ctl_{2,i} * Coef_2 + ... + Ctl_{n,i} * Coef_n$$

wobei $Coef_x$ die den Photosensor 21 tatsächlich durch Überlagerung beaufschlagenden, den individuellen Stimuliersignalen zugeordneten individuellen Stimuliersignalintensitäten und $Ctl_{x,i}$ eine Kontrollmatrix für das individuelle Stimuliersignal x darstellen.

Unter Zuhilfenahme dieser Gleichung werden nunmehr nacheinander für alle möglichen Kombinationen von individuellen Stimuliersignalen 41, 42, 43, 44 die diesen Kombinatinen jeweils zugeordneten Ausgangssignale des Photosensors 21 gemessen und zu Auswertungszwecken erfaßt, und es werden unter Anwendung eines auf multipler linearer Regression basierenden mathematischen Algorithmus die wahrscheinlichsten, den den Photosensor 21 tatsächlich beaufschlagenden individuellen Stimuliersignalen zugeordneten individuellen Stimuliersignalintensitäten $Coef_x$ gemäß der vorstehenden Gleichung berechnet. Anschließend werden mit Hilfe dieser Gleichung für alle möglichen Kombinationen von individuellen Stimuliersignalen 41, 42, 43, 44 die den überlagerten individuellen Stimuliersignalen 46 entsprechenden nominalen Ausgangssignale des zu testenden Photosensors 21 berechnet, wobei deren Beziehung zu den bei jeweils gleichen Stimuliersignalintensitäten gemessenen Ausgangssignalen ein Maß für die Linearität des zu testenden Photosensors 21 darstellt. Die Meßdaten der Ausgangssignale des zu testenden Photosensors 21 werden also mit Hilfe eines Gleichungssystems mit n+1 Unbekannten ($R_0$ eingeschlossen), aber mit $2^n$ unabhängigen Gleichungen bestimmt, so daß die Anzahl der Gleichungen durch alle möglichen Kombinationen der Kontrollfunktion $Ctl_{x,i}$ gegeben ist.

Der relative Antwortfaktor $k_r$ kann einmalig als Quotient aus dem mit Hilfe des zu testenden Photosensors 21 ermittelnden $Coef_x$ und des mittels des Kalibrier-Photosensors 21 ermittelten $Coef_x$ bestimmt werden.

Eine besonders einfache und effektive Auswertung der berechneten und gemessenen Daten zur Bestimmung der Linearität bzw. der Linearitätsfunktion des zu testenden Photosensors 21 kann dadurch erreicht werden, daß ein einem kartesischen Koordinatensystem zugeordneter X-Vektor als dem Quotienten aus den berechneten nominalen Ausgangssignalen jeweils für eine bestimmte Kombination von individuellen Stimuliersignalen 41, 42, 43, 44 und den berechneten nominalen Ausgangssignalen für diejenige Kombination, bei der sich alle Stimuliersignale 41, 42, 43, 44 gemeinsam überlagern, ermittelt wird. Als X-Vektor wird folglich das auf die Maximalintensität normierte nominale Ausgangssignal des zu testenden Photosensors 21 herangezogen. Als Y-Vektor wird das für die jeweils gleiche bestimmte Kombination von individuellen Stimmuliersignalen 41, 42, 43, 44 entsprechende gemessene Ausgangssignal des zu testenden Photosensors 21 herangezogen. Anhand dieser beiden Vektoren werden mittels linearer Regression als Regressionsparameter die Geradensteigung und der Achsenabschnitt berechnet, die ein einfaches und effektives Maß für die nominale lineare Signalübertragungscharakteristik des zu testenden Photosensors 21 darstellen. Ferner kann die relative Fehlercharakteristik des zu testenden Photosensors 21 in einfacher Weise durch einen Vergleich der gemessenen Ausgangssignale mit den nominalen Ausgangssignalen ermittelt werden.

Das Testen der spektralen Antwortfunktion des Photosensors 21 kann wie vorstehend bereits beschrieben mit Hilfe der in mehreren Einheiten 36 bzw. 37 zusammengefaßten unterschiedlich gefärbten Leuchtdioden erzielt werden. Dabei werden unter Berücksichtigung des Transferfaktors $K_0$ die gemessenen Ausgangssignale des zu testenden Photosensors 21 in Beziehung zu den mit dem Referenz-Photosensor 25 gemessenen Ausgangssignalen gesetzt. Wenn außerdem das Verhältnis der Sensorflächen des Kalibrier-Photosensors und des Referenz-Photosensors 25 sowie die Kalibrierdaten des Kalibrier-Photosensors berücksichtigt werden, können die Meßergebnisse als absolute Größen dargestellt werden.

Das Testen der Gleichmäßigkeit bzw. der Homogenität der Antwortfunktion eines Photosensors bzw. eines Photodiodenarrays und das Testen des Geräuschpegels und der Drift des zu testenden Photosensors 21 ist ebenfalls mit Hilfe der erfindungsgemäßen Vorrichtung 20 in einfacher Art und Weise möglich.

Die differentiellen Nicht-Linearitäten des zu prüfenden Photosensors 21 können dadurch bestimmt werden, daß mittels der ein- bzw. ausschaltbaren Stimuliersignalquellen in Form der Mehrzahl von Leuchtdioden Schritt für Schritt der dem Vollausschlag des zu testenden Photosensors 21 entsprechende Intensitätsbereich abgefahren wird und zwischen den einzelnen diskreten Intensitätsschritten die Intensität des optischen Stimuliersignals kontinuierlich, vorzugsweise linear vergrößert bzw. verkleinert wird, indem die Stromzufuhr einer Stimuliersignalquelle entsprechend kontrolliert geändert wird.

Dieses bevorzugte Verfahren zur Bestimmung der differentiellen Nichtlinearitäten eines mit mehreren Photosensorelementen 71, 72, 73 ausgebildeten Photosensors 21 gemäß dem zweiten alternativen Lösungsgedanken wird nachfolgend detaillierter beschrieben. Zur Durchführung dieses Verfahrens wird vorzugsweise die vorstehend beschriebene Vorrichtung verwendet. Dabei wird eine Stimuliersignalquelle eingesetzt, die aus $2^n$ schaltbaren Stimuliersignalquellen 31, 32, 33 mit zweckmäßigerweise binär gewichteter Abstufung und einer veränderlichen Stimuliersignalquelle 34 besteht. Damit lassen sich aufgrund der Kombinationsmöglichkeiten $2^n$ feste annähernd gleiche Stufen realisieren. Eine Gewichtung der einzelnen Stimuliersignalquellen 31, 32, 33, 34 kann durch Parallelschaltung mehrerer gleichartiger Stimuliersignalquellen, vorzugsweise Leuchtdioden, erreicht werden. Eine Stimuliersignalquelle mit einer sich stetig ändernden Stimuliersignalintensität wird dadurch realisiert, daß der Strom durch die Stimuliersignalquelle, also deren Aussteuerung, stetig, vorzugsweise linear verändert wird. Dabei wird unterstellt, daß sich dadurch die durch die Stimuliersignalquelle 34 erzeugte Stimuliersignalintensität, d.h. deren Output, ebenfalls stetig verändert, wobei es unerheblich ist, ob ein linearer Zusammenhang zwischen Aussteuerung und Output vorliegt. Nach dem vorgeschlagenen Verfahren ist ebenfalls unerheblich, wenn eine Stimuliersignalquelle aufgrund thermischer oder sonstiger Einflußfaktoren driftet. Der zeitliche Verlauf der Intensität muß nicht zwingend linear und auch die Intensitätsverteilung über die Pixel muß nicht notwendigerweise homogen sein.

Die Stimuliersignalquellen können einzeln oder in Gruppen unabhängig voneinander geschaltet werden. Die Gewichtung der Gruppen ist zweckmäßigerweise binär gestuft, so daß $2^n$ Schaltkombinationen möglich sind, wobei die Abstufung etwa gleich verteilt über den gesamten Aussteuerbereich erfolgt. Der Aussteuerbereich der veränderbaren Stimuliersignalquelle 34, also derjenige Bereich zwischen einem Minimalwert und einem Maximalwert, der mit dieser erzielbaren Stimuliersignalintensität, ist so gewählt, daß er größer ist als der Aussteuerbereich der schaltbaren Stimuliersignalquellen 31, 32, 33 und diesen überlappt. Dadurch werden in den Übergangsbereichen Unstetigkeiten der resultierenden Stimuliersignalintensität der überlagerten Stimuliersignale 46 vermieden.

Unter Verwendung der vorstehend beschriebenen Vorrichtung 20 lassen sich überlagerte individuelle Stimuliersignale 46 mit einer im wesentlichen konstanten relativen örtlichen Stimuliersignalintensitätsverteilung an der Austrittsöffnung 24 und auf der Oberfläche 28 des aus mehreren Photosensorelementen 71, 72, 73 bestehenden Photosensors 21 erzeugen. Femer läßt sich bei Verwendung der Vorrichtung 20 ein örtlich unterschiedlicher und zeitlich gleichförmiger Verlauf der Stimuliersignalintensität der Stimuliersignale über den Photosensorelementen 71, 72, 73 erreichen.

Zur Qualitätskontrolle, insbesondere zur Bestimmung der differentiellen Nichtlinearität des zu testenden Photosensors 21, werden vorzugsweise alle Photosensorelemente 71, 72, 73 gleichzeitig mit den Stimuliersignalen 46 mit der im wesentlichen konstanten relativen örtlichen Stimuliersignal-intensitätsverteilung beaufschlagt. Dabei wird die Stimuliersignalintensität der Stimuliersignale bei einer im wesentlichen konstanten relativen zeitlichen Verteilung über der Zeit stetig verändert. Dies läßt sich ebenfalls vorteilhaft durch die Verwendung der integrierenden Kugel 22 erreichen.

Dementsprechend werden zur Durchführung der Qualitätskontrolle des Photosensors 21 sequentiell die einzelnen Schaltkombinationen durchgeschaltet und während jeder Schaltsequenz wird der Aussteuerbereich der veränderlichen Stimuliersignalquelle 34 stetig durchfahren. Dabei werden die Meßdaten kontinuierlich erfaßt und gespeichert. Die Meßdaten liegen nun in einer Matrix-Form vor und zwar mit einer reihenorientierten zeitlichen Dimension und einer spaltenorientierten, den einzelnen Photosensorelementen 71, 72, 73 zugeordneten örtlichen Dimension.

Im Ausführungsbeispiel liefert der aus mehreren Photosensorelementen 71, 72, 73 bestehende Photosensor 21 digitale Ausgangssignale in bestimmten Quantisierungsstufen. Die zeitliche Veränderung, also die Änderungsrate der Stimuliersignalintensität der Stimuliersignale 46 wird derart gewählt, daß eine Anzahl, beispielsweise zehn Meßwerte pro Quantisierungsstufe erfaßt werden. Dadurch wird die erforderliche Auflösung erreicht und es kann eine sinnvolle Filterung der Meßdaten erfolgen, um eine Minimierung der statistischen Unsicherheiten bzw. Abweichungen, also des Rauschens zu erreichen. Es versteht sich, daß diese Filterung derart erfolgen muß, daß dabei die regelmäßigen Fehler, insbesondere die der jeweiligen differentiellen Nichtlinearität des Photosensors 21 entsprechenden Unstetigkeiten erhalten bleiben, da gerade diese ermittelt werden sollen. Zur Filterung der digitalen Ausgangssignale liefernden Photosensoren 21 eignen sich FIR (Finite Impulse Response) Filter, die nach dem Prinzip der gleitenden Mittelwertbildung arbeiten, oder auch IIR (Infinite Impulse Response) Filter. Anschließend wird eine Reduktion der Meßwerte auf vorzugsweise vier Datenwerte pro Quantisierungsstufe durchgeführt, um die Testzeit zu minimieren und um die Menge der Meßdaten auf ein sinnvolles Maß zu verringern. Die resultierende Meßdatenmatrix ist in Fig. 7 veranschaulicht, wobei die Ausgangssignal-Intensität über der Zeit und über den einzelnen PhotosensorElementen dargestellt ist.

Bevor eine weitere Datenaufbereitung erfolgt, wird zunächst noch eine Korrektur der Dunkel- bzw. Offset-Ausgangssignal-Werte der Photosensorelemente 71, 72, 73 vorgenommen. Hierzu wird eine Messung der Ausgangssignale jedes der Photosensorelemente 71, 72, 73 ohne Beaufschlagung mit Stimuliersignalen durchgeführt, wobei die entsprechenden Offset-Signalwerte erfaßt werden. Dabei wird zweckmäßigerweise eine größere Anzahl von Meßwerten erfaßt, um die statistischen Unsicherheiten durch Mittelung reduzieren zu können. Anschließend werden von den den einzelnen Photosensorelementen 71, 72, 73 zugeordneten Meßwerten, die bei Beaufschlagung mit Stimuliersignalen gemessen werden, die zugehörigen Offset-Signalwerte subtrahiert und die resultierenden Nominal-Ausgangssignalwerte in der Form von einer orts- und zeitbezogenen Matrix erfaßt.

Daran schließt sich eine Datenaufbereitung zur Bestimmung der differentiellen Nichtlinearität an. Dabei werden alle orts- und zeitbezogenen Nominal-Ausgangssignalwerte mit einem nach einem statistischen Verfahren aus diesen Nominal-Ausgangssignalwerten ermittelten ortsbezogenen Intensitätswert normiert und ferner wird von den resultierenden orts- und zeitbezogenen Datenwerten jeweils ein nach einem statistischen Verfahren aus diesen Datenwerten ermittelter zeitbezogener Intensitätswert subtrahiert.

Dies bedeutet, daß zunächst der Kurvenverlauf über den Photosensorelementen 71, 72, 73 eliminiert wird. Hierzu wird der ortsbezogene bzw. photosensorelementebezogene Intensitätswert für jedes Photosensorelement 71, 72, 73 aus dem Mittelwert der Nominal-Ausgangssignal-Werte der jeweiligen Photosensorelemente über alle Meßzeiten berechnet und aus diesen Daten wird ein mittlerer ortsbezogener Vektor gebildet. Anschließend wird von jedem der aus der Offset-Korrektur resultierenden Datenwerte der zugehörige mittlere ortsbezogene Intensitätswert subtrahiert und das Resultat durch den zugehörigen mittleren ortsbezogenen Intensitätswert dividiert. Die resultierenden Datenwerte werden erfaßt bzw. gespeichert. Auf diese Weise erhält man die in Fig. 8 dargestellte Ergebnismatrix.

Anschließend wird der Kurvenverlauf über der Zeit eliminiert. Hierzu wird zunächst der zeitbezogene Intensitätswert als Medianwert der resultierenden orts- und zeitbezogenen Datenwerte für jede einzelne Meßzeit über alle ortsbezogenen Intensitätswerte berechnet. Daran anschließend wird von jedem der zuvor ermittelten resultierenden orts- und zeitbezogenen Datenwerte der zugehörige zeitbezogene Intensitätswert, hier der Medianwert subtrahiert. Erneut werden die resultierenden Werte erfaßt bzw. gespeichert. Auf diese Weise erhält man die in Fig. 9 dargestellte Ergebnismatrix, deren Elemente nur noch Werte in der Größe des verbleibenden Rauschens und im übrigen Abweichungen aufgrund von differentiellen Nichtlinearitäten aufweisen. In Fig. 10 sind exemplarisch für zwei Photosensorelemente deren Intensitätsverteilungsfunktion über der Zeit aufgetragen. Beispielsweise mit Hilfe einer Schwellwertüberprüfungsmethode können nunmehr exakt die Lage und Größe der differentiellen Fehler für jedes einzelne Photosensorelement 71, 72, 73 ermittelt werden.

Das vorbeschriebene Verfahren verringert die Testzeit und die damit verbundenen Kosten erheblich. Die Anforderungen an die Vorrichtung sind moderat, was sich in der Praxis in Bezug auf Betrieb und Wartung vorteilhaft auswirkt. Weitere Vorteile des erfindungsgemäßen Verfahrens sind nachfolgend stichwortartig aufgeführt: Keine aufwendige Referenzierung oder genaue Messung der optischen Stimulussignale erforderlich; keine hohen Anforderungen an den örtlichen und zeitlichen Verlauf des Stimuliersignals; das Verfahren ist unempfindlich gegen zeitliche Instabilitäten des Stimuliersignals; die Aussteuerung und Messung kann beliebig unterbrochen oder in Abschnitte unterteilt werden; es erfolgt eine konsequente Ausnutzung der redundanten Informationen zur Ermittlung des örtlichen zeitlichen Verlaufs des optischen Stimulussignals; es bestehen keine besonderen Anforderungen an die Genauigkeit der schaltbaren und veränderlichen Stimuliersignalquellen.

## Patentansprüche

1. Verfahren zur Qualitätskontrolle eines Photosensors, insbesondere eines Photodiodenarrays, dessen Ausgangssignal von der Intensität eines mit elektromagnetischen Wellen gebildeten Eingangssignals abhängt, wobei der zu testende Photosensor mit die Eingangssignale ausbildenden Stimuliersignalen unter Variation der Stimuliersignalintensität der Stimuliersignale beaufschlagt wird, und wobei die zugehörigen Ausgangssignale des zu testenden Photosensors gemessen und zu Auswertungszwecken erfaßt werden, wobei der zu testende Photosensor (21) mit wenigstens zwei unabhängig voneinander steuerbaren, sich überlagernden individuellen Stimuliersignalen (41, 42, 43, 44) individueller Stimuliersignalintensität beaufschlagt wird.

2. Verfahren zur Qualitätskontrolle eines Photosensors, nach Anspruch 1, dadurch gekennzeichnet, daß die individuellen Stimuliersignale (41, 42, 43, 44) in einer integrierenden Kugel (22) überlagert werden, die vorzugsweise wenigstens eine Austrittsöffnung (24) für die überlagerten individuellen Stimuliersignale (46) aufweist.

3. Verfahren zur Qualitätskontrolle eines Photosensors, nach Anspruch 2, dadurch gekennzeichnet, daß die integrierende Kugel (22) mit einem Referenz-Photosensor (25) zur Erfassung eines durch Überlagerung der individuellen Stimuliersignale (41, 42, 43, 44) ausgebildeten, der jeweils resultierenden nominalen Stimuliersignalintensität zugeordneten Stimuliersignal-Gesamtfusses optisch verbunden ist, wobei die nominale Stimuliersignalintensität mit dem Referenz-Photosensor (25) und vorzugsweise gleichzeitig die Ausgangssignale des zu testenden Photosensors (21) gemessen und zu Auswertungszwecken erfaßt werden, wobei deren Beziehung zueinander ein Maß für die Qualität des zu testenden Photosensors (21) darstellt.

4. Verfahren zur Qualitätskontrolle eines Photosensors, nach einem der Ansprüche 1 oder 2, dadurch gekennzeichnet, daß anhand der gemessenen Ausgangssignale des Photosensors (21) die den überlagerten Stimuliersignalintensitäten entsprechenden nominalen Ausgangssignale des zu testenden Photosensors (21) berechnet werden, wobei deren Beziehung zu den gemessenen Ausgangssignalen ein Maß für die Qualität des zu testenden Photosensors (21) darstellt.

5. Verfahren zur Qualitätskontrolle eines Photosensors, nach Anspruch 4, dadurch gekennzeichnet, daß nacheinander für alle möglichen Kombinationen von individuellen Stimuliersignalen (41, 42, 43, 44) die diesen Kombinationen jeweils zugeordneten Ausgangssignale des Photosensors (21) gemessen und zu Auswertungszwecken erfaßt werden, und unter Anwendung eines auf multipler linearer Regression basierenden Algorithmus die wahrscheinlichsten, den den Photosensor (21) tatsächlich beaufschlagenden individuellen Stimuliersignalen zugeordneten individuellen Stimuliersignalintensitäten $Coef_x$ gemäß der Gleichung

$$R = R_0 + Ctl_{0,i}*Coef_0 + Ctl_{1,i}*Coef_1 + Ctl_{2,i}*Coef_2 + \ldots + Ctl_{n,i}*Coef_n$$

ermittelt werden, wobei R das Ausgangssignal des Photosensors (21), $R_o$ die dabei ebenfalls berechnete Nullpunktsabweichung, $Coef_x$ der die Intensität des individuellen Stimuliersignals x repräsentierende Koeffizient und $Ctl_{x,i}$ eine Kontrollmatrix für das individuelle Stimuliersignal x darstellt, und wobei anschließend mit Hilfe dieser Gleichung für alle möglichen Kombinationen von individuellen Stimuliersignalen (41, 42, 43, 44) die den überlagerten individuellen Stimuliersignalen (46) entsprechenden nominalen Ausgangssignale des zu testenden Photosensors (21) berechnet werden, wobei deren Beziehung zu den bei jeweils gleichen Stimuliersignalintensitäten gemessenen Ausgangssignalen ein Maß für die Linearität des zu testenden Photosensors (21) darstellt.

6. Verfahren zur Qualitätskontrolle eines Photosensors, nach Anspruch 5, dadurch gekennzeichnet, daß ein einem kartesischen Koordinatensystem zuordenbarer X-Vektor als dem Quotienten aus den nominalen Ausgangssignalen jeweils für eine bestimmte Kombination von individuellen Stimuliersignalen (41, 42, 43, 44) und den nominalen Ausgangssignalen für die Kombination, bei der sich alle Stimuliersignale (41, 42, 43, 44) gemeinsamen überlagern, ermittelt wird und diesem X-Vektor jeweils ein Y-Vektor zugeordnet wird, der dem gemessenen Ausgangssignal des zu testenden Photosensors (21) für die jeweils gleiche bestimmte Kombination von individuellen Stimuliersignalen (41, 42, 43, 44) entspricht und daraus mittels linearer Regression als Regressionsparameter eine Geradensteigung und ein Achsenabschnitt berechnet werden, die ein Maß für die (nominale) lineare Signalübertragungscharakteristik des zu testenden Photosensors (21) darstellen.

7. Verfahren zur Qualitätskontrolle eines Photosensors, insbesondere eines Photodiodenarrays, dessen Ausgangssignal von der Intensität eines mit elektromagnetischen Wellen gebildeten Eingangssignals abhängt, wobei der zu testende Photosensor mit die Eingangssignale ausbildenden Stimuliersignalen unter Variation der Stimuliersignalintensität der Stimuliersignale beaufschlagt wird, und wobei die zugehörigen Ausgangssignale des zu testenden Photosensors gemessen und zu Auswertungszwecken erfaßt werden, wobei der Photosensor mehrere, jeweils individuelle Ausgangssignale liefernde Photosensorelemente aufweist, die mit Stimuliersignalen mit einer im wesentlichen konstanten relativen örtlichen und relativen zeitlichen Verteilung ihrer Stimuliersignalintensität unter stetiger Veränderung derselben beaufschlagt werden.

8. Verfahren zur Qualitätskontrolle eines Photosensors, nach Anspruch 7, dadurch gekennzeichnet, daß die Photosensorelemente (71, 72, 73) mit Stimuliersignalen beaufschlagt werden, deren Stimuliersignalintensität eine über die Photosensorelemente (71, 72, 73) örtlich unterschiedliche Verteilung aufweist.

9. Verfahren zur Qualitätskontrolle eines Photosensors, nach einem der Ansprüche 7 oder 8, dadurch gekennzeichnet, daß die Ausgangssignale jedes Photosensorelements (71, 72, 73) ohne Beaufschlagung mit den Stimuliersignalen als Offset-Signale gemessen und zugehörige Offset-Signalwerte erfaßt werden, und daß die Ausgangssignale jedes Photosensorelements (71, 72, 73) bei Beaufschlagung mit Stimuliersignalen als Meßsignale gemessen und zugehörige Meßsignalwerte erfaßt werden, und daß zur Offset-Korrektur von den Meßsignalwerten jedes Photosensorelements (71, 72, 73) die jeweiligen Offset-Signalwerte subtrahiert und die resultierenden orts- und zeitbezogenen Nominal-Ausgangssignalwerte erfaßt werden, und daß anschließend die orts- und zeitbezogenen Nominal-Ausgangssignalwerte mit einem nach einem statistischen Verfahren aus diesen Nominal-Ausgangssignalwerten ermittelten ortsbezogenen Intensitätswert normiert werden und daß von den resultierenden orts- und zeitbezogenen Datenwerten jeweils ein nach einem statistischen Verfahren aus diesen Datenwerten ermittelter zeitbezogener Intensitätswert subtrahiert wird.

10. Verfahren zur Qualitätskontrolle eines Photosensors, nach Anspruch 9, dadurch gekennzeichnet, daß der ortsbezogene Intensitätswert für jedes Photosensorelement (71, 72, 73) aus dem Mittelwert der Nominal-Ausgangssignal-Werte des jeweiligen Photosensorelements über alle Meßzeiten berechnet wird und daß der zeitbezogene Intensitätswert für jede Meßzeit aus dem Median-Wert der resultierenden orts- und zeitbezogenen Datenwerte der jeweiligen Meßzeit berechnet wird.

11. Verfahren zur Qualitätskontrolle eines Photosensors, nach einem der Ansprüche 9 bis 10, dadurch gekennzeichnet, daß die Photosensorelemente (71, 72, 73) digitale Ausgangssignale mit bestimmten Quantisierungsstufen liefern, wobei die zeitliche Veränderung der Stimuliersignalintensiät derart gewählt ist, daß eine Anzahl von Meßwerten pro Quantisierungsstufe erfaßt werden.

12. Verfahren zur Qualitätskontrolle eines Photosensors, nach Anspruch 11, dadurch gekennzeichnet, daß bei der Messung der Offset-Signale der Photosensorelemente (71, 72, 73) eine entsprechend hohe Anzahl von Meßwerten erfaßt wird.

13. Verfahren zur Qualitätskontrolle eines Photosensors, nach einem der Ansprüche 9 bis 12, dadurch gekennzeichnet, daß vor oder nach der Offset-Korrektur eine Filterung der Ausgangssignale, beispielsweise mittels FIR- oder IIR-Filtern durchgeführt wird und die resultierenden Datenwerte erfaßt werden.

14. Verfahren zur Qualitätskontrolle eines Photosensors, nach einem der Ansprüche 7 bis 13, dadurch gekennzeichnet, daß die Photosensorelemente (71, 72, 73) des zu testenden Photosensors (21) mit wenigstens zwei unabhängig voneinander steuerbaren, sich überlagernden individuellen Stimuliersignalen (41, 42, 43, 44) individueller Stimuliersignalintensität beaufschlagt werden.

**15.** Verfahren zur Qualitätskontrolle eines Photosensors, nach Anspruch 14, dadurch gekennzeichnet, daß die individuellen Stimuliersignale (41, 42, 43, 44) in einer integrierenden Kugel (22) überlagert werden, die vorzugsweise wenigstens eine Austrittsöffnung (24) für die überlagerten individuellen Stimuliersignale (46) aufweist.

**16.** Verfahren zur Qualitätskontrolle eines Photosensors, nach Anspruch 14 oder 15, dadurch gekennzeichnet, daß wenigstens ein erstes Stimuliersignal (44) der unabhängig voneinander steuerbaren Stimuliersignale (41, 42, 43, 44) über der Zeit stetig verändert und mit einem weiteren individuellen Stimuliersignal (41, 42, 43) überlagert wird, wobei das weitere Stimuliersignal (41, 42, 43) von einem ersten, vorzugsweise der Signalintensität Null entsprechenden Schaltzustand in einen zweiten Schaltzustand mit einer größeren Signalintensität überführt wird.

**17.** Verfahren zur Qualitätskontrolle eines Photosensors, nach Anspruch 16, dadurch gekennzeichnet, daß die individuellen Stimuliersignale (41, 42, 43, 44) jeweils von einer Stimuliersignalquelle (31, 32, 33, 34) erzeugt werden, die jeweils einen Aussteuerbereich von möglichen Stimuliersignalintensitäten aufweist, und wobei der Aussteuerbereich der ersten Stimuliersignalquelle (34) größer ist als der Aussteuerbereich der weiteren Stimuliersignalquelle (31, 32, 33) und deren Aussteuerbereich überlappt.

**18.** Vorrichtung zur Durchführung des Verfahrens nach einem der Ansprüche 1 bis 17 zur Qualitätskontrolle eines Photosensors, mit einer Stimuliersignalquelle zur Erzeugung von den Photosensor beaufschlagenden, mit unterschiedlicher Stimuliersignalintensität einstellbaren Stimuliersignalen und einer mit der Stimuliersignalquelle gekoppelten Kontrolleinheit zur Einstellung der unterschiedlichen Stimuliersignalintensitäten und einer mit dem zu testenden Photosensor in Verbindung bringbaren Meßdatenerfassungseinheit zur Messung und Erfassung der Ausgangssignale des Photosensors, wobei die Stimuliersignale als wenigstens zwei unabhängig voneinander steuerbare, sich überlagernde individuelle Stimuliersignale (41, 42, 43, 44) mit einer jeweils individuellen Stimuliersignalintensität ausgebildet sind.

**19.** Vorrichtung nach Anspruch 18, dadurch gekennzeichnet, daß wenigstens zwei unabhängig voneinander steuerbare Stimuliersignalquellen (31, 32, 33, 34) zur Erzeugung der individuellen Stimuliersignale (41, 42, 43, 44) vorgesehen sind.

**20.** Vorrichtung nach Anspruch 18 oder 19, dadurch gekennzeichnet, daß die Stimuliersignalquelle (31, 32, 33, 34) mit Leuchtdioden ausgebildet ist, wobei vorzugsweise jede Leuchtdiode Licht einer im wesentlichen gleichen Wellenlänge emittiert.

**21.** Vorrichtung nach einem der Ansprüche 18 bis 20, dadurch gekennzeichnet, daß die Stimuliersignalquelle (31, 32, 33, 34) mit einer die individuellen Stimuliersignale (41, 42, 43, 44) integrierenden Kugel (22) verbunden ist, die vorzugsweise wenigstens eine Austrittsöffnung (24) für die überlagerten individuellen Stimuliersignale (46) aufweist.

**22.** Vorrichtung nach Anspruch 21, dadurch gekennzeichnet, daß die integrierende Kugel (22) mit einem Referenz-Photosensor (25) zur Erfassung eines durch Überlagerung der individuellen Stimuliersignale (41, 42, 43, 44) ausgebildeten, der jeweils resultierenden Stimuliersignalintensität zugeordneten Stimuliersignal-Gesamtfusses optisch verbunden ist, der vorzugsweise derart angeordnet ist, daß er nur mit den überlagerten, individuellen Stimuliersignalen (46) beaufschlagt wird.

**23.** Vorrichtung nach einem der Ansprüche 21 oder 22, dadurch gekennzeichnet, daß die integrierende Kugel (22) mit wenigstens einer optischen Faser (26) zur Aufnahme der überlagerten individuellen Stimuliersignale (46) und ihrer Weiterleitung zu dem zu testenden Photosensor (21) verbunden ist.

**24.** Vorrichtung nach einem der Ansprüche 19 bis 23, dadurch gekennzeichnet, daß ein Strahlformungsmittel, vorzugsweise eine optische Sammellinse (27) zur Fokussierung der überlagerten individuellen Stimuliersignale (46) auf der Oberfläche (28) des zu testenden Photosensors (21) vorgesehen ist.

**Fig. 1**

**Fig. 2**

INPUT

**Fig. 3**

OUTPUT

INPUT

**Fig. 4**

OUTPUT

INPUT

**Fig. 5**

OUTPUT

INPUT

**Fig. 6**

**Fig. 7**

Data_a

**Fig. 8**

Data_d

**Fig. 9**

Data_t

## Evaluation of DNL

**Data** time,Diode_x

............

**Data** time,Diode_y

_____

time

# Fig. 10